# EUROPEAN PATENT SPECIFICATION

(11) **EP 2 429 133 B1**
(45) Date of publication and mention of the grant of the patent: **20.08.2014**
(21) Application number: 09845709.6
(22) Date of filing: 30.09.2009
(51) Int. Cl.: H04W 4/12, H04L 12/58, H04L 29/08, H04W 4/02, H04W 4/18

(54) **MULTIMEDIA MESSAGING SYSTEM AND LOCATING METHOD THEREOF**
MULTIMEDIA-NACHRICHTENÜBERMITTLUNGSSYSTEM UND LOKALISIERUNGSVERFAHREN DAFÜR
SYSTÈME DE MESSAGERIE MULTIMÉDIA ET SON PROCÉDÉ DE LOCALISATION

(30) Priority: 09.06.2009 CN 200910148037
(43) Date of publication of application: 14.03.2012
(73) Proprietor: ZTE Corporation, Shenzhen, Guangdong 518057 (CN)
(72) Inventor: ZHOU, Shijun, Shenzhen Guangdong 518057 (CN)
(74) Representative: Bokinge, Ole
(86) International application number: PCT/CN2009/074355
(87) International publication number: WO 2010/142100

(56) References cited:
- WO-A1-03/071825
- CN-A- 1 492 717
- CN-A- 1 633 201
- CN-A- 101 076 140
- KR-A- 20070 080 461
- US-A1- 2004 137 921

## Description

### Technical Field

The present invention relates to the Multimedia Messaging Service (MMS) communication network and the Location Service Platform (LPS), and more especially, to a multimedia messaging system and a locating method thereof.

### Background of the Related Art

The Multimedia Messaging Service (MMS) is a messaging service which can transmit multimedia contents between mobile phones between the mobile phone and other applications such as Email server and so on. Multimedia messaging services are divided according to the operator to which the user belongs and the located area. The MMS center (MMSC) to which the user belongs provides the multimedia messaging service for the user.

The Service Provider (SP) refers to the direct provider of mobile internet application services, and is responsible for developing and providing the service which is suitable for the use of mobile phone users according to the requirements of users. Usually, SP has telecommunication operators' access channels, provides services for users, and is the Service Provider (SP) who has telecommunication access resources.

At present, a Multimedia Messaging Service Gateway (MMSC) adopts the MM7 interface interconnecting with the MMSC and SP, and distributes all the single SP services in the whole network. The object is to reduce the forwarding traffic of MM7 and increase the overall processing capability of the MMSC present network.

The Data Service Management Platform (DSMP) connecting with the MMSG and SP is the management core platform of data services, and finishes the functions of the service management and control of data services. DSMP is mainly responsible for user management, service management and SP management, and externally providing the open interface and providing proxy-charging functions for every service gateway and SP. This platform also should provide a variety of statistic and query functions related to data services, such as user statistics, SP and service statistics, and charging statistics and so on.

It can be known from the above that the existing multimedia messaging system provides various services for users, but does not provide the service about locating services for users.

Document US2004/0137921A1 discloses that an MMS publishing system comprises a management tool, an authoring tool, a storage facility, a message router, and a rendering server. The management tool authenticates a first user by using a telephone number of the first user as a user ID. The authoring tool allows the first user to associate rich media content with his telephone number. The content is then stored in the storage facility in association with his telephone number.

### Summary of the Invention

The technical problem to be solved in the present invention is to provide a multimedia messaging system and locating method, so as to provide the locating function for multimedia messaging users.

In order to solve the foregoing problem, the present invention discloses a method for implementing location, which is defined in the independent claims, comprising:
a Multimedia Messaging Service Gateway (MMSG) receiving a locating request message including a located number initiated by a user, and sending a locating message to a Location Query System (LQS) according to the locating request message;
the LQS receiving the locating message, and querying location information of the located number from a Location Service Platform (LSP) according to the locating message;
when the LQS receives the location information returned by the LSP, the LQS making the location information into a multimedia message to return to the MMSG by a locating response message; and
the MMSG returning the location information to the user by a locating result message;
thereby implementing location based on a multimedia messaging system.

Furthermore, in the above method, the locating request message includes a plain code of a sending party number and a plain code of the located number, and the sending party number is a number of the user who initiates the locating request message; the plain code of the located number is the located number.

Furthermore, in the above method, when the locating request message is initiated by the user for locating the user self, the located number is the number of the user; when the locating request message is initiated by the user for locating other users, the located number is a number of other users.

Furthermore, in the above method, the MMSG firstly performs authentication on the user by a Data Service Management Platform (DSMP) after receiving the locating request message, and when the user passes the authentication, then sends the locating message to the LQS.

Furthermore, in the above method, the DSMP encrypts the plain code of the sending party number and/or the plain code of the located number of as a pseudo code, and stores the plain code of the sending party number, the plain code of the located number, the pseudo code of the sending party number, and the pseudo code of the located number.

Furthermore, in the above method, when the MMSG sends the locating message to the LQS, the locating message includes any one kind of following information:
the plain code of the sending party number and the plain code of the located number; the plain code of the sending party number and the pseudo code of the located number; the pseudo code of the sending party number and the plain code of the located number; the pseudo code of the sending party number and the pseudo code of the located number.
Furthermore, in the above method, the MMSG reads the pseudo code of the sending party number in the locating response message, and sends a message including the pseudo code of the sending party number to the DSMP; and
DSMP searches for the plain code of the sending party number according to the pseudo code of the sending party number after receiving the message, and returns the searched plain code of the sending party number to the MMSG, and the MMSG returns the location information to the user according to the plain code of the sending party number.

Furthermore, in the above method, when the locating message includes the plain code of the sending party number and the pseudo code of the located number, or includes the pseudo code of the sending party number and the pseudo code of the located number;
when querying the location information of the located number from the LSP, the LQS sends querying request to the LSP, the querying request includes the pseudo code of the located number; and
the LSP receives the querying request, and queries the plain code of the located number from the DSMP according to the pseudo code of the located number, performs location processing according to the queried plain code of the located number, and returns the location information to the LQS.

The present invention further discloses a multimedia messaging system, which comprises a Multimedia Messaging Service Gateway (MMSG), a Location Query System (LQS) and a Location Service Platform (LSP) connected in turn, wherein,
the MMSG is used to: receive a locating request message including a located number initiated by a user, and to send a locating message to the LQS according to the locating request message, and when receiving a locating response message including location information returned by the LQS, return the location information to the user by a locating result message;
the LQS is used to: receive the locating message, and send querying request to the LSP according to the locating message, and is further used to: receive the location information returned by the LSP, and make the location information into a multimedia message to return to the MMSG by the locating response message;
the LSP is used to: receive the querying request sent by the LQS, perform location processing according to the querying request, and return the location information after processing to the LQS.

Furthermore, in the above system, when the locating request message received by the MMSG is initiated by the user for locating the user self, the located number is a number of the user; when the locating request message received by the MMSG is initiated by the user for locating other users, the located number is a number of other users.

Furthermore, the above system further comprises a Data Service Management Platform (DSMP) connected with the MMSG;
the MMSG is further used to: send an authentication message to the DSMP after receiving the locating request message, and when an authentication result returned by the DSMP is that the user passes authentication, further send the locating message to the LQS;
the DSMP is used to: receive the authentication message sent by the MMSG, perform authentication on the user according to the authentication message, and return the authentication result to the MMSG.

In the above system, the MMSG is further used to: send a message including a sending party number and the located number to the DSMP, wherein the sending party number is a number of the user;
the DSMP is further used to: receive the message, and respectively encrypt the sending party number and the located number as a pseudo code to return to the MMSG.

The MMSG is further used to: read the pseudo code of the sending party number in the locating response message when receiving the locating response message returned by the LQS, and send a message including the pseudo code of the sending party number to the DSMP;
the DSMP is further used to: transform the pseudo code of the sending party number into the plain code after receiving the message including the pseudo code of the sending party number to send to the MMSG.

When the MMSG sends the locating message to the LQS, the locating message includes any one kind of following information:
the plain code of the sending party number and the plain code of the located number; or the plain code of the sending party number and the pseudo code of the located number; or the pseudo code of the sending party number and the plain code of the located number; or the pseudo code of the sending party number and the pseudo code of the located number.

Furthermore, the DSMP further connects with the LSP, wherein
the LQS includes the pseudo code of the located number into the querying request sent to the LSP;
when receiving the querying request, the LSP is further used to: query the plain code of the located number from the DSMP according to the pseudo code of the located number in the querying request, perform location processing according to the plain code of the located number, and return the location information to the LQS.

The technical scheme of the present invention provides the locating service for the multimedia messaging user, it is simple and practicable, and has a very strong applicability.

### Brief Description of Drawings

FIG. 1 is a structural schematic diagram of the multimedia messaging system according to an example;
FIG. 2 is a flow chart for implementing location by multimedia messaging in the system shown in FIG.1.

### Preferred Embodiments of the Present Invention

The main conception of the present invention is: adding a new locating service on the basis of various services provided by the existing multimedia messaging system, the locating service can be implemented by the Location Query System (LQS) and the Location Service Platform (LSP), and DSMP performs the service authentication on the user who makes the locating request. In addition, in consideration of the locating message related to the privacy of users, the involved user number and located number both use pseudo codes in the process of LQS interacting with the multimedia messaging system in the preferred examples.

Below the technical scheme of the present invention will be further described in detail with reference to drawings and specific examples.

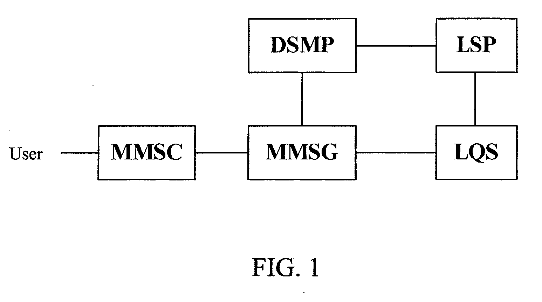

A multimedia messaging system can provide locating services for multimedia messaging users, and the structure, as shown in FIG. 1, comprises MMSG, MMSC connecting with MMSG, DSMP, LQS, and LSP connecting with both LQS and DSMP, and MMSC also connects with users. The functions of each part will be described in detail below.

MMSG is used to: receive the locating request message sent by MMSC and data packets (which is called as the locating response message) including the locating result sent by LQS, send the authentication message to DSMP according to the received locating request message and locating response message, when the locating request message passes authentication, send the locating message to LQS, and send the location information in the locating response message which passes the authentication to MMSC via the locating result message, wherein the locating request message can be the multimedia message, and also can be the common short message;
in the preferred example, MMSG sends the authentication message including locating request information to DSMP according to the locating request message, the locating request information at least includes the plain code of the sending party number and the plain code of the located number (the real number of the sending party and the real number of the located party), wherein the sending party number is the number of the user who initiates the locating request; when MMSG sends the authentication message to DSMP according to the locating response message, the authentication message at least includes the pseudo code of the sending party number (the encrypted sending party number).

MMSC is used to: forward the locating request message initiated by the user and return the locating result message sent by MMSG to the user;
wherein MMSC can forward various messages according to the prior art.

DSMP is used to: perform authentication according to the received authentication message, and return the authentication result to MMSG;
in the preferred examples, if the authentication message received by DSMP includes a locating request message, DSMP encrypts the sending party number and the located number in the locating request message as the pseudo codes respectively, then returns them to MMSG by the authentication result; if the authentication message received by DSMP is in regard to the locating result authentication, that is, the authentication message includes the pseudo code of the sending party number, DSMP transforms the pseudo code into the plain code, and then returns it to MMSG by the authentication result; if DSMP receives the pseudo code of the located number sent by LSP, then returns the plain code of the located number to LSP.

LQS is used to: receive the locating message sent by MMSG, send the locating message to LSP, make the location information returned by LSP into the multimedia message, and then return it to MMSG by the locating response message, wherein LQS makes the location information into the multimedia message complying with the configured format according to the system configuration;
wherein the configuration of the routing information of LQS can be configured according to the common SP. In the preferred example, LQS sends the location information returned by LSP together with the pseudo codes of the sending party number and the located number returned by LSP to MMSG by the locating response message.

LSP is used to: receive the locating message sent by LQS, and send the pseudo code of the located number in the locating message to DSMP, perform location according to the plain code of the located number returned by DSMP, and return the location information after location processing to LQS, wherein LSP can perform location processing according the prior art after obtaining the plain code of the located number.

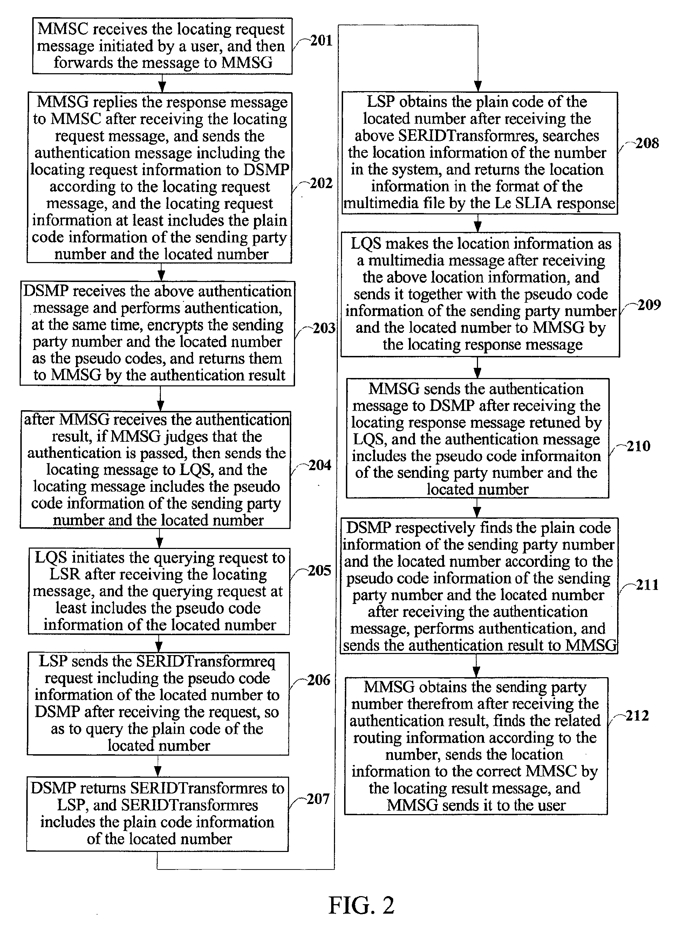

Below the process for implementing the location in the above system will be described in detail, and as shown in FIG. 2, the process comprises following steps of:
step 201: MMSC receives the locating request message initiated by a user, and then forwards the message to MMSG;
   in this step, the locating request message initiated by the user can be a multimedia message or a common short message. The user can initiate the locating request regarding to the user itself or can initiate the locating request regarding to other users.
Step 202: MMSG replies the response message to MMSC after receiving the locating request message, and sends the authentication message including the locating request information to DSMP according to the locating request message, and the locating request information at least includes the plain code of the sending party number and the plain code of the located number, wherein the sending party number refers to the number of the user who initiates the locating request;
   in this step, when the locating request message received by the MMSG is the locating request that the user locates itself, the sending party number and the located number included in the locating request information that is included in the authentication message are the same, wherein the plain code of the sending party number and the plain code of the located number refer to the real number of the sending party number and the real number of the located number.
Step 203: DSMP receives the above authentication message and performs authentication, and at the same time, encrypts the sending party number and the located number as the pseudo codes respectively, and returns them to MMSG by the authentication result;
   in this step, when DSMP receives the above authentication message, DSMP performs authentication on the user who initiates the locating request, for instance, whether the user opens the locating service is judged, or whether the account of the user has enough money to pay for the service is judged, etc.;
   in another example, DSMP also can encrypt any one of the sending party number and the located number as the pseudo code, and return it to MMSG by the authentication result; or DSMP also is able to not perform any encryption processing on the sending party number or the located number, wherein when DSMP performs encryption processing, DSMP stores the plain code of the encrypted number and the corresponding pseudo code.
   In a plurality of other examples, in the operating process of the above steps 202 and 203, MMSG can respectively send the authentication message used for service authentication and the request message used for transforming numbers to DSMP according to the locating request message after receiving the locating request message, and DSMP, which receives the authentication message and the request message for transforming numbers, can respectively return the authentication result message and the response message for transforming numbers to MMSG, or only return the authentication result message to MMSG and the authentication result message includes the information of the transformed number.
Step 204: after MMSG receives the authentication result, if MMSG judges that the authentication is passed, then sends the locating message to LQS, and the locating message includes the pseudo code of the sending party number and the pseudo code of the located number;
step 205: LQS initiates the querying request (Le SLIR) to LSR after receiving the locating message, and the querying request at least includes the pseudo code of the located number;
step 206: LSP sends the SERIDTransformreq request including the pseudo code of the located number to DSMP after receiving the request, so as to query the plain code of the located number;
step 207: DSMP returns SERIDTransformres to LSP, and SERIDTransformres includes the plain code of the located number;
step 208: LSP obtains the plain code of the located number after receiving the above SERIDTransformres, and searches the location information of the number in the system, and returns the location information in the format of the multimedia file by the Le SLIA response;
step 209: LQS makes the location information into a multimedia message after receiving the above location information, and sends it together with the pseudo codes of the sending party number and the located number to MMSG by the locating response message;
   in this step, LQS makes the location information into the multimedia message in a format supported by the terminal or as a unified format multimedia message.
Step 210: MMSG sends the authentication message to DSMP after receiving the locating response message retuned by LQS, and the authentication message includes the pseudo code of the sending party number and the pseudo code of the located number;
step 211: DSMP respectively finds the plain code of the sending party number and plain code of the located number according to the pseudo code of the sending party number and the pseudo code of the located number after receiving the authentication message, performs authentication, and sends the authentication result to MMSG;
   in the step, when DSMP receives the above authentication message, the DSMP finds the pseudo code of the sending party number and the pseudo code of the located number from the plain codes and the corresponding pseudo codes of various numbers stored locally, and sends the corresponding plain codes of the sending party number and the located number to MMSG by authentication result.
   In other examples, in the operating process of the above steps 210 and 211, MMSG can respectively send the authentication message used for service authentication and the request message used for transforming numbers to DSMP after receiving the locating response message, and DSMP, which receives the authentication message and the request message for transforming numbers, can respectively return the authentication result message and the response message for transforming numbers to MMSG, or only return the authentication result message to MMSG and the authentication result message includes the information of transformed number.
Step 212: MMSG obtains the sending party number therefrom after receiving the authentication result, finds the related routing information according to the number, sends the location information to the correct MMSC by the locating result message, and MMSG sends it to the user.

It can be seen from the above examples that the technical scheme of the present invention performs location query of users by the multimedia message, and adopts a plurality of necessary security measures for performing effective protection on the information of users, such as respectively encrypting a sending party number and a located number as pseudo codes, etc., and the implemented functions have very strong applicability. At the same time, as the amount of works for improving the present network in the technical scheme of the present invention is much less and the network element needs to be updated is much less too, the newly added LQS can be implemented according to the manner of the present network element SP technically, and therefore, the difficulty of project implementation of the technical scheme of the present invention is not large, and it can be embodied in the present network completely.

The above description is just the preferred examples of the present invention, which is not used to limit the present invention.

### Industrial Applicability

The technical scheme of the present invention performs location query of users by the multimedia message, and adopts a plurality of necessary security measures for performing effective protection on the information of users, such as respectively encrypting a sending party number and a located number as pseudo codes, etc., and the implemented functions have very strong applicability. At the same time, as the amount of work for improving the present network in the technical scheme of the present invention is much less and the network element needs to be updated is much less too, the newly added LQS can be implemented according to the manner of the present network element SP technically, and therefore, the difficulty of project implementation of the technical scheme of the present invention is not large, and it can be embodied in the present network completely.

## Claims

1. A method for implementing location, comprising:
a Multimedia Messaging Service Gateway (MMSG) receiving a locating request message including a located number initiated by a user, and sending a locating message to a Location Query System (LQS) according to the locating request message;
the LQS receiving the locating message, and querying location information of the located number from a Location Service Platform (LSP) according to the locating message;
when the LQS receives the location information returned by the LSP, the LQS making the location information into a multimedia message to return to the MMSG by a locating response message; and
the MMSG returning the location information to the user by a locating result message;
wherein the step of the MMSG sending the locating message to the LQS according to the locating request message comprises: the MMSG performing authentication on the user by a Data Service Management Platform (DSMP), and when the user passes the authentication, sending the locating message to the LQS;
thereby implementing location based on a multimedia messaging system.

2. The method according to claim 1, wherein,
the locating request message includes a plain code of a sending party number and a plain code of the located number, and the sending party number is a number of the user who initiates the locating request message; the plain code of the located number is the located number.

3. The method according to claim 2, wherein,
when the locating request message is initiated by the user for locating the user self, the located number is the number of the user; when the locating request message is initiated by the user for locating other users, the located number is a number of other users.

4. The method according to any of claims 1-3, wherein,
when the locating message includes the plain code of the sending party number and the pseudo code of the located number, or includes the pseudo code of the sending party number and the pseudo code of the located number,
the step of the LQS querying the location information of the located number from the LSP comprises:
the LQS sending querying request to the LSP, the querying request including the pseudo code of the located number; and
the LSP receiving the querying request, and querying the plain code of the located number from the DSMP according to the pseudo code of the located number, performing location processing according to the queried plain code of the located number, and returning the location information to the LQS.

5. The method according to any of claims 1-4, wherein the step of the MMSG performing authentication on the user by the DSMP comprises:
the DSMP encrypting the plain code of the sending party number and/or the plain code of the located number of as a pseudo code, and storing the plain code of the sending party number, the plain code of the located number, the pseudo code of the sending party number, and the pseudo code of the located number.

6. The method according to claim 5, wherein the locating message includes: the plain code of the sending party number and the plain code of the located number; or the plain code of the sending party number and the pseudo code of the located number; or the pseudo code of the sending party number and the plain code of the located number; or the pseudo code of the sending party number and the pseudo code of the located number.

7. The method according to claim 6, wherein,
when the locating message includes the pseudo code of the sending party number and the plain code of the located number, or includes the pseudo code of sending party number and the pseudo code of the located number;
after the step of the LQS returning the location information to the MMSG by the locating response message, the method further comprising:
the MMSG reading the pseudo code of the sending party number in the locating response message, and sending a message including the pseudo code of the sending party number to the DSMP; and
DSMP searching for the plain code of the sending party number according to the pseudo code of the sending party number after receiving the message including the pseudo code of the sending party number sent by the MMSG, and returning the searched plain code of the sending party number to the MMSG, and the MMSG returning the location information to the user according to the plain code of the sending party number.

8. A multimedia messaging system, which is configured to carry out the method as defined in any of claims 1-7, comprising a Multimedia Messaging Service Gateway (MMSG), a Location Query System (LQS) and a Location Service Platform (LSP) connected in turn, wherein,
the MMSG is configured to: receive a locating request message including a located number initiated by a user, send a locating message to the LQS according to the locating request message, and when receiving a locating response message including location information returned by the LQS, return the location information to the user by a locating result message;
the LQS is configured to: receive the locating message, and send querying request to the LSP according to the locating message, receive the location information returned by the LSP, and make the location information into a multimedia message to return to the MMSG by the locating response message;
the LSP is configured to: receive the querying request sent by the LQS, perform location processing according to the querying request, and return the location information after processing to the LQS; and further comprising
a Data Service Management Platform (DSMP) connected with the MMSG, the DSMP is configured to: receive the authentication message sent by the MMSG, perform authentication on the user according to the authentication message, and return the authentication result to the MMSG.

9. The system according to claim 8, wherein,
when the locating request message is initiated by the user for locating the user self, the located number is a number of the user; when the locating request message is initiated by the user for locating other users, the located number is a number of other users.

10. The system according to claim 8 or 9, wherein
the MMSG is further configured to: send an authentication message to the DSMP after receiving the locating request message, and when an authentication result returned by the DSMP is that the user passes authentication, send the locating message to the LQS;

11. The system according to claim 10, wherein,
the MMSG is further configured to: send a message including a sending party number and the located number to the DSMP, wherein the sending party number is a number of the user;
the DSMP is further configured to: receive the message including the sending party number and the located number, and respectively encrypt the sending party number and/or the located number as a pseudo code to return to the MMSG.

12. The system according to claim 11, wherein,
the MMSG is further configured to: read the pseudo code of the sending party number in the locating response message when receiving the locating response message returned by the LQS, and send a message including the pseudo code of the sending party number to the DSMP;
the DSMP is further configured to: transform the pseudo code of the sending party number into the plain code after receiving the message including the pseudo code of the sending party number to send to the MMSG.

13. The system according to claim 12, wherein,
the locating message includes: the plain code of the sending party number and the plain code of the located number; or the plain code of the sending party number and the pseudo code of the located number; or the pseudo code of the sending party number and the plain code of the located number; or the pseudo code of the sending party number and the pseudo code of the located number.

14. The system according to claim 13, wherein,
the DSMP further connects with the LSP;
the LQS is further configured to: include the pseudo code of the located number into the querying request sent to the LSP;
the LSP is further configured to: when receiving the querying request, query the plain code of the located number from the DSMP according to the pseudo code of the located number in the querying request, perform location processing according to the plain code of the located number, and return the location information to the LQS.

## Patentansprüche

1. Verfahren zur Durchführung von Lokalisierung, das Folgendes umfasst:
Empfang einer Lokalisierungsanforderungsnachricht durch ein Multimedia Messaging Service Gateway (MMSG), wobei die Lokalisierungsanforderungsnachricht eine lokalisierte Nummer enthält, die von einem Benutzer initiiert wird, und Senden einer Lokalisierungsnachricht an ein Location Query System (LQS) gemäß der Lokalisierungsanforderungsnachricht;
Empfang der Lokalisierungsnachricht vom LQS und Abfrage von Lokalisierungsinformationen der lokalisierten Nummer von einer Location Service Platform (LSP) gemäß der Lokalisierungsnachricht;
Änderung der Lokalisierungsinformationen in eine Multimedianachricht durch das LSQ, wenn das LQS die von der LSP zurückgegebenen Lokalisierungsinformationen empfängt, um diese durch eine Lokalisierungsantwortnachricht an das MMSG zurückzugeben; und
Rückgabe der Lokalisierungsinformationen durch das MMSG an den Benutzer über eine Lokalisierungsergebnisnachricht;
wobei der Schritt des Sendens der Lokalisierungsnachricht durch das MMSG an das LQS gemäß der Lokalisierungsanforderungsnachrich Folgendes umfasst: Durchführen einer Authentifizierung des Benutzers durch das MMSG über eine Data Service Management Platform (DSMP) und, wenn der Benutzer die Authentifizierung besteht, Senden der Lokalisierungsnachricht an das LQS;
und dadurch Durchführung der Lokalisierung basierend auf einem Multimedia-Messaging-System.

2. Verfahren nach Anspruch 1, wobei
die Lokalisierungsanforderungsnachricht einen einfachen Code einer Nummer eines sendenden Teilnehmers und einen einfachen Code der lokalisierten Nummer enthält und die Nummer eines sendenden Teilnehmers eine Nummer des Benutzers ist, der die Lokalisierungsanforderungsnachricht initiiert; der einfache Code der lokalisierten Nummer die lokalisierte Nummer ist.

3. Verfahren nach Anspruch 2, wobei,
wenn die Lokalisierungsanforderungsnachricht vom Benutzer zum Lokalisieren des Benutzers selbst initiiert wird, die lokalisierte Nummer die Nummer des Benutzers ist; wenn die Lokalisierungsanforderungsnachricht vom Benutzer zum Lokalisieren anderer Benutzer initiiert wird, die lokalisierte Nummer eine Nummer anderer Benutzer ist.

4. Verfahren nach einem der Ansprüche 1-3, wobei,
wenn die Lokalisierungsnachricht den einfachen Code der Nummer eines sendenden Teilnehmers und den Pseudocode der lokalisierten Nummer enthält oder den Pseudocode der Nummer eines sendenden Teilnehmers und den Pseudocode der lokalisierten Nummer enthält,
der Schritt der Abfrage der Lokalisierungsinformationen der lokalisierten Nummer von der LSP durch das LQS Folgendes umfasst:
Senden einer Abfrageanforderung durch das LQS an die LSP, wobei die Abfrageanforderung den Pseudocode der lokalisierten Nummer enthält; und
Empfangen der Abfrageanforderung und des einfachen Codes der lokalisierten Nummer von der DSMP gemäß dem Pseudocode der lokalisierten Nummer von der LSP, Durchführung der Lokalisierungsverarbeitung gemäß dem abgefragten einfachen Code der lokalisierten Nummer und Rückgabe der Lokalisierungsinformationen an das LQS.

5. Verfahren nach einem der Ansprüche 1-4, wobei der Schritt der Authentifizierung des Benutzers durch das MMSG über die DSMP Folgendes umfasst:
Verschlüsselung des einfachen Codes der Nummer eines sendenden Teilnehmers und/oder des einfachen Codes der lokalisierten Nummer als Pseudocode durch die DSMP und Speichern des einfachen Codes der Nummer eines sendenden Teilnehmers, des einfachen Codes der lokalisierten Nummer, des Pseudocode der Nummer eines sendenden Teilnehmers und des Pseudocodes der lokalisierten Nummer.

6. Verfahren nach Anspruch 5, wobei die Lokalisierungsnachricht Folgendes enthält:
den einfachen Code der Nummer eines sendenden Teilnehmers und den einfachen Code der lokalisierten Nummer; oder den einfachen Code der Nummer eines sendenden Teilnehmers und den Pseudocode der lokalisierten Nummer; oder den Pseudocode der Nummer eines sendenden Teilnehmers und den einfachen Code der lokalisierten Nummer;
oder den Pseudocode der Nummer eines sendenden Teilnehmers und den Pseudocode der lokalisierten Nummer.

7. Verfahren nach Anspruch 6, wobei,
wenn die Lokalisierungsnachricht den Pseudocode der Nummer eines sendenden Teilnehmers und den einfachen Code der lokalisierten Nummer enthält oder den Pseudocode der Nummer eines sendenden Teilnehmers und den Pseudocode der lokalisierten Nummer enthält,
das Verfahren nach dem Schritt der Rückgabe der Lokalisierungsinformationen durch das LQS an das MMSG mittels der Lokalisierungsantwortnachricht weiter Folgendes umfasst:
Lesen des Pseudocodes der Nummer eines sendenden Teilnehmers in der Lokalisierungsantwortnachricht durch das MMSG und Senden einer Nachricht, die den Pseudocode der Nummer eines sendenden Teilnehmers enthält, an die DSMP und
Suche nach dem einfachen Code der Nummer eines sendenden Teilnehmers gemäß dem Pseudocode der Nummer eines sendenden Teilnehmers nach dem Empfangen der vom MMSG gesendeten Nachricht, die den Pseudocode der Nummer eines sendenden Teilnehmers enthält, durch die DSMP und Rückgabe des gesuchten einfachen Codes der Nummer eines sendenden Teilnehmers an das MMSG und Rückgabe der Lokalisierungsinformationen an den Benutzer gemäß dem einfachen Code der Nummer eines sendenden Teilnehmers durch das MMSG .

8. Multimedia-Messaging-System, das konfiguriert ist, um das Verfahren nach einem der Ansprüche 1-7 auszuführen, und das ein Multimedia Messaging Service Gateway (MMSG), ein Location Query System (LQS) und eine Location Service Platform (LSP) umfasst, die reihum verbunden sind, wobei
das MMSG konfiguriert ist, um eine Lokalisierungsanforderungsnachricht, die eine lokalisierte Nummer enthält, die von einem Benutzer initiiert wird, zu empfangen, eine Lokalisierungsnachricht an das LQS gemäß der Lokalisierungsanforderungsnachricht zu senden und beim Empfangen einer Lokalisierungsantwortnachricht, die Lokalisierungsinformationen enthält, die vom LQS zurückgegeben wird, die Lokalisierungsinformationen an den Benutzer durch eine Lokalisierungsergebnisnachricht zurückzugeben;
das LQS konfiguriert ist, um die Lokalisierungsnachricht zu empfangen und eine Abfrageanforderung an die LSP gemäß der Lokalisierungsnachricht zu senden, die von der LSP zurückgegebenen Lokalisierungsinformationen zu empfangen und die Lokalisierungsinformationen in eine Multimedianachricht zur Rückgabe an das MMSG durch die Lokalisierungsantwortnachricht umzuändern;
die LSP konfiguriert ist, um die vom LQS gesendete Abfrageanforderung zu empfangen, Lokalisierungsverarbeitung gemäß der Abfrageanforderung durchzuführen und die Lokalisierungsinformationen nach dem Verarbeiten an das LQS zurückzugeben; und weiter umfassend
eine mit dem MMSG verbundene Data Service Management Platform (DSMP), wobei die DSMP konfiguriert ist, um die vom MMSG gesendete Authentifizierungsnachricht zu empfangen, Authentifizierung des Benutzers gemäß der Authantifizierungsnachricht durchzuführen und das Authentifizierungsergebnis an das MMSG zurückzugeben.

9. System nach Anspruch 8, wobei,
wenn die Lokalisierungsanforderungsnachricht vom Benutzer zum Lokalisieren des Benutzers selbst initiiert wird, die lokalisierte Nummer eine Nummer des Benutzers ist; wenn die Lokalisierungsanforderungsnachricht vom Benutzer zum Lokalisieren anderer Benutzer initiiert wird, die lokalisierte Nummer eine Nummer anderer Benutzer ist.

10. System nach Anspruch 8 oder 9, wobei
das MMSG weiter konfiguriert ist, um eine Authentifizierungsnachricht nach dem Empfangen der Lokalisierungsanforderungsnachricht an die DSMP zu senden und, wenn ein von der DSMP zurückgegebenes Authentifizierungsergebnis ist, dass der Benutzer die Authentifizierung besteht, die Lokalisierungsnachricht an das LQS zu senden;

11. System nach Anspruch 10, wobei
das MMSG weiter konfiguriert ist, um eine Nachricht, die eine Nummer eines sendenden Teilnehmers und die lokalisierte Nummer enthält, an die DSMP zu senden, wobei die Nummer eines sendenden Teilnehmers eine Nummer des Benutzers ist;
die DSMP weiter konfiguriert ist, um: die Nachricht, die die Nummer eines sendenden Teilnehmers und die lokalisierte Nummer enthält, zu empfangen und jeweils die Nummer eines sendenden Teilnehmers und/oder die lokalisierte Nummer als Pseudocode zur Rückgabe an das MMSG zu verschlüsseln.

12. System nach Anspruch 11, wobei
das MMSG weiter konfiguriert ist, um: den Pseudocode der Nummer eines sendenden Teilnehmers in der Lokalisierungsantwortnachricht beim Empfangen der vom LQS zurückgegebenen Lokalisierungsantworknachricht zu lesen und eine Nachricht, die den Pseudocode der Nummer eines sendenden Teilnehmers enthält, an die DSMP zu senden;
die DSMP weiter konfiguriert ist, um: den Pseudocode der Nummer eines sendenden Teilnehmers nach dem Empfangen der Nachricht, die den Pseudocode der Nummer eines sendenden Teilnehmers enthält, zum Senden an das MMSG in den einfachen Code umzuwandeln.

13. System nach Anspruch 12, wobei
die Lokalisierungsnachricht Folgendes enthält: den einfachen Code der Nummer eines sendenden Teilnehmers und den einfachen Code der lokalisierten Nummer; oder den einfachen Code der Nummer eines sendenden Teilnehmers und den Pseudocode der lokalisierten Nummer; oder den Pseudocode der Nummer eines sendenden Teilnehmers und den einfachen Code der lokalisierten Nummer; oder den Pseudocode der Nummer eines sendenden Teilnehmers und den Pseudocode der lokalisierten Nummer.

14. System nach Anspruch 13, wobei
die DSMP weiter mit der LSP verbunden ist;
das LQS weiter konfiguriert ist, um: den Pseudocode der lokalisierten Nummer in die an die LSP gesendete Abfrageanforderung aufzunehmen;
die LSP weiter konfiguriert ist, um beim Empfangen der Abfrageanforderung den einfachen Code der lokalisierten Nummer von der DSMP gemäß dem Pseudocode der lokalisierten Nummer in der Abfrageanforderung abzufragen, Lokalisierungsverarbeitung gemäß dem einfachen Code der lokalisierten Nummer durchzuführen und die Lokalisierungsinformationen an das LQS zurückzugeben.

## Revendications

1. Procédé d'implémentation de localisation, comprenant :
la réception par une passerelle de service de messagerie multimédia (MMSG) d'un message de demande de localisation incluant un numéro localisé initié par un utilisateur, et l'envoi par la MMSG d'un message de localisation à un système de requête de localisation (LQS) selon le message de demande de localisation ;
la réception par le LQS du message de localisation, et la requête par le LQS d'informations de localisation du numéro localisé auprès d'une plateforme de service de localisation (LSP) selon le message de localisation ;
lorsque le LQS reçoit les informations de localisation renvoyées par la LSP, la transformation par le LQS des informations de localisation en un message multimédia à renvoyer à la MMSG par un message de réponse de localisation ; et
le renvoi par la MMSG des informations de localisation à l'utilisateur par un message de résultat de localisation ;
dans lequel l'étape d'envoi par la MMSG du message de localisation au LQS selon le message de demande de localisation comprend : la réalisation par la MMSG d'une authentification de l'utilisateur par une plateforme de gestion de service de données (DSMP), et lorsque l'utilisateur réussit l'authentification, l'envoi par la MMSG. du message de localisation au LQS ;
une localisation étant ainsi implémentée sur la base d'un système de messagerie multimédia.

2. Procédé selon la revendication 1, dans lequel le message de demande de localisation inclut un code en clair d'un numéro de partie d'envoi et un code en clair du numéro localisé, et le numéro de partie d'envoi est un numéro de l'utilisateur qui initie le message de demande de localisation ; le code en clair du numéro localisé est le numéro localisé.

3. Procédé selon la revendication 2, dans lequel lorsque le message de demande de localisation est initié par utilisateur pour localiser l'utilisateur lui-même, le numéro localisé est le numéro de l'utilisateur ; lorsque le message de demande de localisation est initié par l'utilisateur pour localiser d'autres utilisateurs, le numéro localisé est un numéro d'autres utilisateurs.

4. Procédé selon l'une quelconque des revendications 1 à 3, dans lequel
lorsque le message de localisation inclut le code en clair du numéro de partie d'envoi et le pseudo-code du numéro localisé, ou inclut le pseudo-code du numéro de partie d'envoi et le pseudo-code du numéro localisé,
l'étape de requête par le LQS des informations de localisation du numéro localisé auprès de la LSP comprend :
l'envoi par le LQS d'une demande de requête à la LSP, la demande de requête incluant le pseudo-code du numéro localisé ; et
la réception par la LSP de la demande de requête, et la requête par la LSP du code en clair du numéro localisé auprès de la DSMP selon le pseudo-code du numéro localisé, la réalisation par la LSP d'un traitement de localisation selon le code en clair requis du numéro localisé, et le renvoi par la LSP des informations de localisation au LQS.

5. Procédé selon l'une quelconque des revendications 1 à 4, dans lequel l'étape de réalisation par la MMSG d'une authentification de l'utilisateur par la DSMP comprend :
le chiffrement par la DSMP du code en clair du numéro de partie d'envoi et/ou du code en clair du numéro localisé sous forme de pseudo-code, et le stockage par la DSMP du code en clair du numéro de partie d'envoi, du code en clair du numéro localisé, du pseudo-code du numéro de partie d'envoi et du pseudo-code du numéro localisé.

6. Procédé selon la revendication 5, dans lequel le message de localisation inclut : le code en clair du numéro de partie d'envoi et le code en clair du numéro localisé ; ou le code en clair du numéro de partie d'envoi et le pseudo-code du numéro localisé, ou le pseudo-code du numéro de partie d'envoi et le code en clair du numéro localisé ; ou le pseudo-code du numéro de partie d'envoi et le pseudo-code du numéro localisé.

7. Procédé selon la revendication 6, dans lequel lorsque le message de localisation inclut le pseudo-code du numéro de partie d'envoi et le code en clair du numéro localisé, ou inclut le pseudo-code du numéro de partie d'envoi et le pseudo-code du numéro localisé ;
après l'étape de renvoi par le LQS des informations de localisation à la MMSG par le message de réponse de localisation, le procédé comprenant en outre :
la lecture par la MMSG du pseudo-code du numéro de partie d'envoi dans le message de réponse de localisation, et l'envoi par la MMSG d'un message incluant le pseudo-code du numéro de partie d'envoi à la DSMP ; et
la recherche par la DSMP du code en clair du numéro de partie d'envoî selon le pseudo-code du numéro de partie d'envoi après la réception du message incluant le pseudo-code du numéro de partie d'envoi envoyé par la MMSG, et le renvoi par la DSMP du code en clair recherché du numéro de partie d'envoi à la MMSG, et le renvoi par la MMSG des informations de localisation à l'utilisateur selon le code en clair du numéro de partie d'envoi.

8. Système de messagerie multimédia, qui est configuré pour réaliser le procédé tel que défini dans l'une quelconque des revendications 1 à 7, comprenant une passerelle de service de messagerie multimédia (MMSG), un système de requête de localisation (LQS) et une plateforme de service de localisation (LSP) connectés à tour de rôle, dans lequel,
la MMSG est configurée pour : recevoir un message de demande de localisation incluant un numéro localisé initié par un utilisateur, envoyer un message de localisation au LQS selon le message de demande de localisation, et lors de la réception d'un message de réponse de localisation incluant des informations de localisation renvoyées par le LQS, renvoyer les informations de localisation à l'utilisateur par un message de résultat de localisation ;
le LQS est configuré pour : recevoir le message de localisation et envoyer la demande de requête à la LSP selon le message de localisation, recevoir les informations de localisation renvoyées par la LSP, et transformer les informations de localisation en un message multimédia à renvoyer à la MMSG par le message de réponse de localisation ;
la LSP est configurée pour : recevoir la demande de requête envoyée par le LQS, réaliser un traitement de localisation selon la demande de requête, et renvoyer les informations de localisation après traitement au LQS ; et comprenant en outre
une plateforme de gestion de service de données (DSMP) connectée à la MMSG, la DSMP est configurée pour : recevoir le message d'authentification envoyé par la MMSG, réaliser une authentification de l'utilisateur selon le message d'authentification, et renvoyer le résultat d'authentification la MMSG.

9. Système selon la revendication 8, dans lequel
lorsque le message de demande de localisation est initié par l'utilisateur pour localiser l'utilisateur lui-même, le numéro localisé est un numéro de l'utilisateur ; lorsque le message de demande de localisation est initié par l'utilisateur pour localiser d'autres utilisateurs, le numéro localisé est un numéro d'autres utilisateurs.

10. Système selon la revendication 8 ou 9, dans lequel
la MMSG est en outre configurée pour : envoyer un message d'authentification à la DSMP après réception du message de demande de localisation, et lorsqu'un résultat d'authentification renvoyé par la DSMP est que l'utilisateur réussit l'authentification, envoyer le message de localisation au LQS.

11. Système selon la revendication 10, dans lequel
la MMSG est en outre configurée pour : envoyer un message incluant un numéro de partie d'envoi et le numéro localisé à la DSMP, dans lequel le numéro de partie d'envoi est un numéro de l'utilisateur ;
la DSMP est en outre configurée pour : recevoir le message incluant le numéro de partie d'envoi et le numéro localisé, et chiffrer respectivement le numéro de partie d'envoi et/ou le numéro localisé sous forme de pseudo-code à renvoyer à la MMSG.

12. Système selon la revendication 11, dans lequel
la MMSG est en outre configurée pour : lire le pseudo-code du numéro de partie d'envoi dans le message de réponse de localisation lors de la réception du message de réponse de localisation renvoyé par le LQS, et envoyer un message incluant le pseudo-code du numéro de partie d'envoi à la DSMP ;
la DSMP est en outre configurée pour : transformer le pseudo-code du numéro de partie d'envoi en le code en clair après réception du message incluant le pseudo-code du numéro de partie d'envoi à envoyer à la MMSG.

13. Système selon la revendication 12, dans lequel
le message de localisation inclut : le code en clair du numéro de partie d'envoi et le code en clair du numéro localisé ; ou le code en clair du numéro de partie d'envoi et le pseudo-code du numéro localisé ; ou le pseudo-code du numéro de partie d'envoi et le code en clair du numéro localisé ; ou le pseudo-code du numéro de partie d'envoi et le pseudo-code du numéro localisé.

14. Système selon la revendication 13, dans lequel
la DSMP se connecte en outre à la LSP ;
le LQS est en outre configuré pour : inclure le pseudo-code du numéro localisé dans la demande de requête envoyée à la LSP ;
la LSP est en outre configurée pour : lors de la réception de la demande de requête, requérir le code en clair du numéro localisé auprès de la DSMP selon le pseudo-code du numéro localisé dans la demande de requête, réaliser un traitement de localisation selon le code en clair du numéro localisé, et renvoyer les informations de localisation au LQS.
